# EUROPÄISCHE PATENTSCHRIFT

(11) **EP 1 314 704 B1**
(45) Veröffentlichungstag und Bekanntmachung des Hinweises auf die Patenterteilung: **21.04.2004**
(21) Anmeldenummer: 02023215.3
(22) Anmeldetag: 16.10.2002
(51) Int. Cl.: C03C 3/091, C03B 27/04

(54) **Thermisch vorspannbares Alkaliborosilikatglas, seine Herstellung und seine Verwendung**
Thermally temperable alkali-boro-silica glass, its production and its use
Verre de alcali-boro-silicate à tremper, sa production et son utilisation

(30) Priorität: 16.10.2001 DE 10150884
(43) Veröffentlichungstag der Anmeldung: 28.05.2003
(73) Patentinhaber: Schott Glas, 55122 Mainz (DE); Carl-Zeiss-Stiftung trading as Schott Glas, 55122 Mainz (DE)
(72) Erfinder: Lautenschläger, Gerhard, Dr., 07743 Jena (DE); Schneider, Klaus, Dipl.-Ing., 99510 Apolda (DE); Karschti, Thomas, 55257 Budenheim (DE); Leipold-Hass, Ulrich, Dipl.-Phys., 07749 Jena (DE); Walter, Ursula, 07743 Jena (DE); Sprenger, Andreas, Dipl.-Ing., 55122 Mainz (DE); Kasprzik, Holger, 55257 Budenheim (DE)
(74) Vertreter: Fuchs Mehler Weiss & Fritzsche, Patentanwälte

(56) Entgegenhaltungen:
- EP-A- 0 699 636
- DE-A- 2 756 555
- DE-A- 4 325 656
- DE-C- 4 230 607
- GB-A- 2 136 413

## Beschreibung

Die Erfindung betrifft ein thermisch vorspannbares Alkaliborosilikatglas, bzw. einen aus diesem bestehenden Glaskörper, der thermisch gut vorspannbar ist, sowie ein Verfahren zu seiner Herstellung und seine Verwendung insbesondere als Brandschutzglas.

Alkaliborosilikatgläser sind an sich bekannt und beispielsweise unter dem Handelsnamen Duran, Jenaer Glas oder auch Pyrex im Handel erhältlich. Dabei enthält beispielsweise Duran 80,2 Gew.-% SiO₂, 13,4 Gew.-% B₂O₃, 2,3 Gew.-% Al₂O₃, 3,5 Gew.-% Na₂O und 0, 6 Gew.-% K₂O.

Alkaliborosilikatgläser zeichnen sich aus durch eine geringe Empfindlichkeit gegenüber Temperaturwechsel, sowie einer Formbeständigkeit bis zu hohen Temperaturen. Darüber hinaus zeigen derartige Gläser beim Kontakt mit Flüssigkeiten eine hervorragende chemische Beständigkeit. Aus diesem Grunde werden diese Gläser für eine Vielzahl von Anwendungen als Haushalts- und Wirtschaftsglas eingesetzt. Insbesondere in Laboratorien, aber auch im Industrieanlagenbau finden diese Glassorten Verwendung. So werden beispielsweise Glasrohrleitungen beliebiger Länge für Abwassergase oder zur Weiterleitung von aggressiven Chemikalien verwendet. Eine weitere Verwendung wird beispielsweise auch in der Pharmazie eingesetzt. Alkaliborosilikatgläser erfüllen auch die Anforderungen der Pharmazie. Auch in der Elektrotechnik zur elektrischen Isolation finden Alkaliborosilikatgläser Verwendung.

Auch im Hochbau findet Glas eine immer stärkere Verbreitung, z.B. bei der Fassadengestaltung, für Brüstungselemente, Dächer, Türen und auch für Trennwände. Dies bringt beim Ausbruch eines Brandes erhöhte Gefahren mit sich. Übliche Flachgläser zerbersten bereits bei einseitiger Hitzeeinwirkung in kurzer Zeit, wobei großflächige Bruchstücke herausfallen und den Feuerüberschlag in die angrenzenden Räume ermöglichen. Um dies zu verhindern ist früher bereits versucht worden, Glasscheiben durch Einlegen eines Drahtgeflechtes am Zerbrechen zu hindern, so dass auch beim Springen einer Glasscheibe deren Bruchstücke durch das Drahtgeflecht im Gefüge festgehalten werden.

Es sind auch bereits Brandschutzgläser entwickelt worden, welche die Bedingungen der Feuerwiderstandsklassen G und F erfüllen (DIN 4102 Teil 13 (ISO 834). Dabei müssen Verglasungen einschließlich der Rahmen und der Halterungen nach einer Einheitstemperaturzeitkurve (ETK) den Flammen- und Brandgasdurchtritt mindestens 30 bzw. 60, 90 oder 120 Minuten verhindern, um den Klassen G30, G60, G90 und G 110 zugeteilt zu werden. Analoge Vorschriften gelten für die Klassen F30, F60, F90 und F120. Darüber hinaus darf das Glas auf der dem Feuer abgewandten Seite sich im Mittel um nicht mehr als um 140°C über die Anfangstemperatur erwärmen.

Darüber hinaus werden an Gebäudeverglasungen oftmals zusätzliche Anforderungen gestellt. So müssen z.B. Verglasungen in Türen neben dem Brandschutz auch die Sicherheit der Benutzer gewährleisten, d.h. die Verglasungen müssen nicht nur die Brandschutznormen, sondern auch die Anforderungen der einschlägigen Sicherheitsnormen, wie z.B. für Einscheibensicherheitsglas (DIN 1249, Teil 12 bzw. DIN EN 12150) erfüllen.

Bei den bekannten Brandschutzverglasungen werden diese Anforderungen auf unterschiedlichste Art und Weise gelöst, wobei jedoch alle bekannten Systeme spezifische Nachteile aufweisen.

So sind z.B. Brandschutzverglasungen bekannt, bei denen vorgespannte Kalk-Natron-Gläser in entsprechender Dicke verwendet werden, wobei für Dicken von 6-15 mm Feuerwiderstandszeiten von 30 - 60 Minuten erreicht werden. Derartige vorgespannte Kalk-Natron-Gläser weisen jedoch den Nachteil auf, dass sie während der Temperaturbelastung bei der Einheitstemperaturzeitkurve bereits zu einem relativ frühen Zeitpunkt ihre Erweichungstemperatur überschreiten. Auf diese Weise kommt es vor, dass bereits vor der 30. Minute die zuvor festen elastischen Gläser in einen niedrigen viskosen plastischen Zustand übergehen und sich verformen. Um jedoch hohe Feuerwiderstandszeiten zu erreichen, ist eine hohe Erweichungstemperatur (Temperatur bei 10^{7,6} dPa·s) notwendig. Weitere Einflussfaktoren sind die Scheibengröße, die Scheibendicke und die Breite der Randabdeckung, die Haltekräfte der Scheibe und die Beschaffenheit des Rahmenmaterials. Prinzipiell gilt je breiter die Randabdeckung der Scheibe ist, umso länger wird ein Herausrutschen der Glasscheibe aus den Randbereichen verhindert, wenn die Gläser im Verlaufe der Brandbelastung ihre Erweichungstemperatur erreicht haben. Gleichzeitig bestimmt jedoch die Breite des abgedeckten Randbereiches zusammen mit dem linearen thermischen Längenausdehnungskoeffizienten des Glases die Höhe der bei der Brandbelastung zwischen heißer (freistehender) Scheibenmitte und kaltem (abgedecktem) Scheibenrand entstehenden Spannungen. Überschreiten im Brandfall diese Spannungen die Festigkeit des Glases, so kommt es unweigerlich zum Bruch der Glasscheibe und somit zum vollkommenen Verlust der Brandschutzwirkung. Aus diesem Grund ist es nicht möglich, die Randabdeckung der Scheibe beliebig groß zu wählen um eine möglichst hohe Feuerwiderstandszeit zu erreichen.

Es ist auch bereits versucht worden, zur Erreichung von hohen Feuerwiderstandszeiten bei Kalk-Natron-Gläsern Mehrschichtverbundglassysteme zu entwickeln. Dabei werden mehrere zum Teil vorgespannte Kalk-Natron-Scheiben mit dazwischen liegenden Hitzeabsorptionsschichten verbunden. Derartige Verbundgläser haben jedoch zum Nachteil, dass sie zur Erreichung höherer Feuerwiderstandsklassen viele Glasschichten und Hitzeabsorptionsschichten aufweisen müssen, wodurch deren Herstellung aufwendig und teuer wird. Darüber hinaus zeigen diese Gläser eine große Dicke und ein hohes Gewicht, wodurch sich Einbau und Rahmenkonstruktion ebenfalls verteuert.

Es sind auch bereits Brandschutzverglasungen aus vorgespannten Alkaliborosilikatgläsern bekannt und für die Brandschutzklassen G und F kommerziell erhältlich. Diese weisen einen niedrigen linearen thermischen Längenausdehnungskoeffizienten von ca. 3,3 x 10⁻⁶ K⁻¹ auf. Dieser niedrige lineare thermische Längenausdehnungskoeffizient verringert die im Brandfalle auftretenden thermischen Spannungen im Glas, so dass mit solchen Gläsern höhere Feuerwiderstandszeiten bei gleichzeitig geringerem Randeinstand ermöglicht werden. Diese Gläser haben jedoch zum Nachteil, dass aufgrund des niedrigen linearen thermischen Längenausdehnungskoeffizienten auf herkömmlichen Luftvorspannanlagen nur eine sehr geringe Vorspannung in die Gläser eingebracht werden kann, so dass diese Gläser in der Regel nicht die gewünschten Anforderungen für Sicherheitsgläser erfüllen, wie z.B. die zuvor erwähnte DIN 1249.

Aus diesem Grund sind bereits Alkaliborosilikatgläser entwikkelt worden, die einen Wärmeausdehnungskoeffizienten von > 3,5 x 10⁻⁶ K⁻¹ aufweisen. Derartige Gläser sind beispielsweise in der DE-A-42 30 607 beschrieben. Nachteilig ist der in diesen Gläsern notwendige Gehalt an ZrO₂. Es hat sich gezeigt, dass diese Gläser beispielsweise durch nicht aufgeschmolzene ZrO₂-Relikte beim thermischen Vorspannen des Glases zu Spontanbrüchen neigen.

Auch in der DE-A-43 25 656 werden Alkaliborosilikatgläser für Brandschutzverglasungen beschrieben, welche die Anforderungen an ein thermisch vorspannbares Brandschutzsicherheitsglas erfüllen. Es hat sich jedoch gezeigt, dass bei diesen Gläsern beispielsweise beim Formgebungsprozeß im Floatverfahren aufgrund der stark reduzierenden Bedingungen (p(O₂)im Floatbad < 10⁻¹⁰ bar) das in der Glasschmelze enthaltene Zn²⁺ in der Oberfläche des Glasbandes zu Zn^{±0} reduziert wird. Zn^{±0} ist jedoch leicht verdampfbar, so dass dies aus dem Glas heraussublimiert und im Floatbad an Bauteilen, wie z.B. den Assistrollern, kondensiert, so dass diese während des Prozesses immer wieder aufwendig gereinigt werden müssen. Darüber hinaus bildet nicht sublimiertes aber trotzdem reduziertes Zn auf der Oberfläche des Flachglases einen Belag, der die Qualität des Glases stark beeinträchtigt.

Darüber hinaus enthält dieses Glas zwingend ZrO₂, welches bei Brandschutzsicherheitsgläsern den Nachteil aufweist, dass bereits geringe Mengen an nicht aufgeschmolzenem ZrO₂/ZrSiO₄ bzw. sekundär auskristallisiertes ZrO₂/ZrSiO₄ beim thermischen Vorspannen zu Spontanbrüchen führt. Darüber hinaus verschlechtert ZrO₂ das Einschmelzverhalten, wodurch wesentlich höhere Energiekosten entstehen.

Die DE-A-195 15 608 beschreibt ein Alkaliborosilikatglas mit einem linearen thermischen Längenausdehnungskoeffizienten von 3,9 - 4,5 x 10⁻⁶ K⁻¹. Dieses Glas ist speziell für das vollelektrische Schmelzen unter cold top-Bedingungen geeignet. Für dieses Glas ist jedoch ebenfalls ZrO₂ als Bestandteil zwingend vorgeschrieben, so dass dieses als Brandschutzsicherheitsglas aus den bereits erwähnten Gründen nicht geeignet ist.

Auch in der DE-A-27 56 555 werden thermisch hoch vorspannbare Gläser mit einer Dehnung zwischen 3,39 - 5,32 x 10⁻⁶ K⁻¹ beschrieben. Diese Gläser weisen den Nachteil auf, dass sie im Brandfall nicht in ausreichendem Maße den Durchtritt der Wärmestrahlung verhindern.

In der DE-A-44 30 710 werden Gläser mit einer hohen chemischen Beständigkeit beschrieben. Diese Gläser sind jedoch schwer schmelzbar und zeigen eine hohe Dichte auf.

In der EP-A-0 576 362 wird ein thermisch stabiles und chemisch resistentes AlkaliAlkaliborosilikatglas für Brandschutzverglasungen beschrieben. Dieses hat jedoch zum Nachteil, dass es wegen der hohen Transformationstemperatur von > 600°C auf gewöhnlichen Luftvorspannanlagen nicht thermisch vorspannbar ist und wegen der niedrigen Viskosität der Schmelztemperaturen (logη = 2 bei ca. 1.450°C) können viele Läutermittel, wie beispielsweise NaCl und KCl nicht verwendet werden.

Dieses trifft auch auf die JP-A-61 024 344 zu, welche ebenfalls eine für eine Kochsalzläuterung zu niedrige Schmelztemperatur aufweist. Darüber hinaus ist der notwendigerweise vorliegende V₂O₅-Anteil für die Formgebung im Float-Verfahren ungünstig, da hier das V⁵⁺-Ion im Floatbad reduziert wird. Außerdem wirkt sich V₂O₅ auch für die angestrebte sehr hohe Lichttransmission sehr nachteilig aus.

Schließlich wird in der US-A-5,776,884 ein Alkaliborosilikatglas mit guter Feuerresistenz und Thermoschockbeständigkeit beschrieben. Dabei liegt jedoch der lineare thermische Ausdehnungskoeffizient zwischen 8,0 und 9,5 x 10⁻⁶ K⁻¹ und der strain point bei nur ca. 25K über demjenigen von normalem Kalk-Natron-Glas. Es hat sich auch gezeigt, dass dieses Glas nur eine geringe chemische Beständigkeit im Vergleich zu Alkaliborosilikatgläsern aufweist.

Die DE-A-196 43 870 beschreibt Alkaliborosilikatgläser, die durch Ionenaustausch chemisch vorgespannt werden. Chemisch gehärtete vorgespannte Gläser zerfallen jedoch bei mechanischer Zerstörung nicht in kleine Krümel, so dass diese nicht die Anforderungen von Sicherheitsglas erfüllen. Die Erfindung hat zum Ziel die vorgeschilderten Nachteile und Probleme zu überwinden und ein Glas bereitzustellen, welches leicht thermisch vorspannbar ist. Darüber hinaus soll das Glas eine hohe Transmission aufweisen. Schließlich soll das Glas sich in allen herkömmlichen Wannenaggregaten leicht aufschmelzen lassen und ohne Probleme einen kontinuierlichen Glaswechsel vom Glastyp Duran/Pyrex oder einem Glas ähnlicher Dichte zu einem erfindungsgemäßen Glas ohne Ablass der Wanne ermöglichen. Darüber hinaus soll das Glas auch die Erfordernisse eines Brandschutzglases und/oder eines Sicherheitsglases erfüllen.

Es wurde nun gefunden, dass sich dieses Ziel durch einen Glaskörper gemäß Anspruch 1 erreichen läßt. Es wurde nämlich gefunden, dass ein Glaskörper der Zusammensetzung

| | |
|---|---|
| SiO₂ | 78,3 - 81,0 Gew.-% |
| B₂O₃ | 9,0 - 13,0 Gew.-% |
| Al₂O₃ | 3,5 - 5,3 Gew.-% |
| Na₂O | 3,5 - 6,5 Gew.-% |
| K₂O | 0,3 - 2,0 Gew.-% |
| CaO | 0,0 - 2,0 Gew.-% |

die gewünschten Eigenschaften aufweist.

In der erfindungsgemäßen Zusammensetzung ist SiO₂ in einer Menge von mindestens 78,3 und insbesondere mindestens 78,4 Gew.-% bzw. 78,5 Gew.-% enthalten. Die Obergrenze des SiO₂-Gehaltes liegt erfindungsgemäß bei 81,0, vorzugsweise 80,5 und insbesondere bei 79,5 Gew.-%. Die Mindestmenge an B₂O₃ beträgt erfindungsgemäß 9,0, vorzugsweise mindestens 9,5 bzw. 10,0 und insbesondere mindestens 10,5 Gew.-%, wobei der maximale Gehalt höchstens 13 Gew.-%, vorzugsweise 12,5 Gew.-% und insbesondere 11,9 Gew.-% beträgt. Der Gehalt an Al₂O₃ beträgt erfindungsgemäß mindestens 3,5 Gew.-%, vorzugsweise mindestens 3,7 Gew.-%, insbesondere mindestens 3,9 Gew.-% und maximal 5,3 Gew.-%, vorzugsweise maximal 4,9 Gew.-% und insbesondere maximal 4,5 Gew.-%.

Der Gehalt an Na₂O beträgt erfindungsgemäß mindestens 3,5 Gew.-%, vorzugsweise mindestens 4,0 Gew.-% und insbesondere mindestens 4,1 Gew.-%, wobei die Obergrenze bei 6,5 Gew.-%, vorzugsweise 6,0 Gew.-% und insbesondere 5,5 Gew.-% liegt. Der Gehalt an K₂O beträgt erfindungsgemäß mindestens 0,3 Gew.-%, vorzugsweise 0,5 Gew.-% und insbesondere mindestens 0,6 Gew.-%, wobei die Maximalmenge 2,0 Gew.-%, vorzugsweise 1,8 Gew.-%, üblicherweise 1,6 Gew.-% und insbesondere 1,5 Gew.-% beträgt. Der Gehalt an CaO kann ggf. optional sein, wobei jedoch mindestens 0,1 Gew.-% und insbesondere mindestens 0,2 bzw. 0,4 Gew.-% und 0,5 Gew.-% besonders bevorzugt ist. Üblicherweise beträgt die Menge an CaO > 0,3 Gew.-% und liegt bei ganz besonders bevorzugten Ausführungsformen bei mindestens 0,6 Gew.-% und insbesondere bei mindestens 1,0 Gew.-%. Die Obergrenze an CaO beträgt dabei 2,0 Gew.-%, üblicherweise 1,8 Gew.-%, vorzugsweise 1,7 Gew.-% und insbesondere 1,6 bzw. 1,5 Gew.-%. Obwohl die erfindungsgemäße Zusammensetzung üblicherweise keine oder nur Verunreinigungen an MgO enthält, hat sich auch ein Gehalt an MgO von > 0-1 Gew.-% als zweckmäßig erwiesen.

Das erfindungsgemäße Alkaliborosilikatglas ist vorzugsweise im wesentlichen frei von Oxiden polyvalenter Ionen, wie beispielsweise As₂O₃, Sb₂O₃, CeO₂, TiO₂, V₂O₅, Bi₂O₃, Pb₃O₄, ZnO und SnO₂. Ein Anteil von < 1000 ppm, insbesondere von < 500 ppm dieser Oxide, stellt die üblicherweise unvermeidbare Menge an Verunreinigungen dar. Der erfindungsgemäße Glaskörper weist jedoch insbesondere keine Zirkon-haltigen Bestandteile, wie beispielsweise ZrO₂ oder ZrSiO₂ auf, da ZrO₂ schmelzverzögernd wirkt und die Entglasung fördert. Darüber hinaus können, wie bereits beschrieben, ZrO₂-Keime, -Einschlüsse und/oder -Kristalle beim thermischen Vorspannen zum Bruch des Glases führen.

Das erfindungsgemäße Glas ist auch im wesentlichen frei von Eisenoxiden, insbesondere Fe₂O₃. Vorzugsweise ist die Menge an durch Verunreinigungen eingeschleppten Eisenoxiden, d.h. an Fe₂O₃ und FeO, maximal 150 ppm. Auf diese Weise wird eine hohe Lichttransmission ermöglicht. Prinzipiell ist es erfindungsgemäß bevorzugt, dass die Eisenionen sofern vorhanden im Verhältnis von Fe³⁺/Fe²⁺ > 1,5 vorliegen. Bei einer solchen Menge und einem derartigen Verhältnis wird eine hohe optische Brillanz des Glaskörpers erreicht.

Obwohl prinzipiell eine hohe Transmission eines Glases zur Folge hat, dass die Wärmebestrahlung auf der dem Feuer abgewandten Seite der Scheibe mit zunehmender Branddauer ansteigt, ist dies überraschenderweise bei den erfindungsgemäßen Gläsern nicht der Fall. Bei der zuvor beschriebenen erfindungsgemäßen Glaszusammensetzung kommt es überraschenderweise bei einem Temperaturanstieg zu einer Entmischung, d.h. zur Ausbildung von Alkaliborattröpfchen auf der dem Feuer zugewandten Seite der Scheibe, wodurch die im Brandfall auftretende Wärmestrahlung signifikant erniedrigt wird. Dieser Effekt wird z.B. durch einen Gehalt an K₂O erreicht.

In einer bevorzugten Ausführungsform enthält der erfindungsgemäße Glaskörper einen geringen Anteil von Fluoridionen. Dieser Anteil beträgt vorzugsweise 0,05 - 0,5 Gew.-% Fluorid. Dabei wird das Fluorid als ein Salz zugesetzt, welches als Kation einen der ohnehin in der Glasschmelze vorliegenden Glasbestandteile enthält. Eine bevorzugte Fluoridform ist CaF₂. Es hat sich gezeigt, dass bereits sehr niedrige Fluoridmengen von 0,05 Gew.-% das Abschmelzen des Gemengenteppiches erleichtern. Darüber hinaus bewirkt eine Fluoridzunahme eine Herabsetzung der Oberflächenspannung der Glasschmelze, wodurch das Aufsteigen von Blasen und deren Austritt durch die Schmelzoberfläche beim Läutern erleichtert wird. Dies ist um so überraschender als Fluoridmengen bis 0,5 Gew.-% keinerlei Einfluss auf die Glasviskosität und insbesondere auf den für die Brandschutzgläser wichtigen EW (Temperatur bei 10^{7,6} dPa·s) ausüben. Auch auf die Transformationstemperatur konnte bei diesen Mengen an Fluorid keinerlei Einfluss festgestellt werden. Es hat sich außerdem gezeigt, dass der Zusatz von Fluoriden bei der Verarbeitung des erfindungsgemäßen Glases im Float-Verfahren die Handhabbarkeit, wie beispielsweise das Ausspreiten, wesentlich verbessern.

Es hat sich gezeigt, dass sich das erfindungsgemäße Glas in sämtlichen konventionellen Schmelzaggregaten sowohl mit der sogenannten Verbrennung mit Luft (air-fuel) sowie der mit Sauerstoff (oxy-fuel) oder auch vollelektrisch bestens erschmolzen werden kann. Es hat sich erwiesen, dass es auch für die Aufschmelzung mit elektromagnetischen Wellen geeignet ist. In diesen Fällen können zum leichten Einkoppeln der elektromagnetischen Welle bekannte einkoppelnde Ionen zugesetzt werden. Ein gut einkoppelndes Ion ist beispielsweise Li.

Das erfindungsgemäße Glas weist in einer bevorzugten Ausführungsform eine niedrige Dichte von < 2,3 g/cm auf. Diese geringe Dichte erleichtert in einer Schmelzwanne den kontinuierlichen Glaswechsel, d.h. das Umschmelzen von einem Glas auf ein anderes wenn in ein und derselben Schmelzwanne Gläser vom Typ Duran/Pyrex und ein erfindungsgemäßes Glas periodisch abwechselnd hergestellt, d.h. aufgeschmolzen, werden soll. Es hat sich nämlich gezeigt, dass Dichteunterschiede, insbesondere Unterschiede > 0,1 g/cm², zwischen dem alten Glas und dem neu einzulegenden Glas den Glaswechsel in der Wanne deutlich verlängern, da die Dichteunterschiede eine Vermischung der Gläser in der Wanne verhindern, zumindest jedoch sehr stark verzögern. Gerade diese Entmischung wird durch eine nahe am Duran liegende Dichte des erfindungsgemäßen Glases vermieden.

Das erfindungsgemäße Glas weist vorzugsweise einen linearen thermischen Längenausdehnungskoeffizienten α_{20/300} auf, der zwischen 3,8 und 4,4 x 10⁻⁶ K⁻¹, vorzugsweise jedoch zwischen 3,9 und 4,3 x 10⁻⁶ K⁻¹ liegt. Besonders bevorzugt ist ein Wert zwischen 3,95 und 4,1 x 10⁻⁶/K.

Die spezifische Wärmespannung beträgt am erfindungsgemäßen Glas vorzugsweise 0,3 bis 0,5 N/(mm² K).

Beim erfindungsgemäßen Glas beträgt die Transformationstemperatur T_{g} 545°C - 610°C, vorzugsweise 550°C - 580°C und insbesondere 560°C - 575°C.

Die Temperatur bei der Viskosität 10¹³ dPa·s liegt zwischen 540°C und 630°C und vorzugsweise zwischen 560°C und 630°C, wobei Werte zwischen 580°C und 610°C besonders bevorzugt sind. Die Temperatur bei der Viskosität 10^{7,6} dPa·s liegt zwischen 790°C und 880°C, vorzugsweise zwischen 810°C und 870°C, wobei Werte zwischen 810°C und 860°C bzw. speziell zwischen 820°C und 860°C besonders bevorzugt sind. Die Temperatur bei der eine Viskosität von 10⁴ dPa·s beträgt, liegt zwischen 1220°C und 1310°C, wobei 1235°C und 1295°C bevorzugt sind. Besonders bevorzugt liegt die Viskosität bei einer Temperatur zwischen 1240°C und 1290°C.

Der erfindungsgemäße Glaskörper wird vorzugsweise als Glasplatte oder Glasscheibe verwendet. Dies kann beispielsweise mit dem erfindungsgemäß besonders bevorzugten Float-Verfahren geschehen. Es ist jedoch auch möglich, dass dies mit anderen zur Herstellung von Flachglas bekannten Verfahren, wie beispielsweise dem Ziehverfahren, wie Downdraw, Updraw, Overflow-Fusion und/oder dem Fourcault-Verfahren, Libbey-Owens-Verfahren, dem Pittsburgh-Verfahren etc. erfolgt. Prinzipiell ist es auch möglich die erfindungsgemäßen Gläser in einer beliebigen Form, wie beispielsweise einer gebogenen Windschutzscheibe für Kraftfahrzeuge oder auch für Gebrauchsgläser im Haushalt und im industriellen Bereich herzustellen, wie beispielsweise für Labors, in Form von Glasröhren oder Kochgeschirr, beispielsweise auch für den Mikrowellenbereich oder auch zum Aufsetzen auf eine Herdplatte.

Das erfindungsgemäße Glas wird nach seiner Fertigstellung und Formgebung, beispielsweise als Flachglas, einem thermischen Vorspannprozess unterworfen. Dabei wird das Glas vorzugsweise hängend oder liegend in eine Vorrichtung geführt und rasch auf eine Temperatur bis maximal etwa 150°C, vorzugsweise maximal etwa 100°C über die Transformationstemperatur erwärmt. Danach wird das Glas durch ein seiner Form angepasstes Düsensystem mit kalter Luft angeblasen. In Folge des raschen Abkühlens der Glasoberfläche wird diese in einem aufgeweiteten Gitter eingefroren während sich das Glasinnere langsam abkühlt und Zeit hat sich stärker zusammen zu ziehen. Da aber Oberfläche und Inneres des Glases miteinander verbunden sind, entsteht in der Oberflächenschicht eine Druckvorspannung und im Inneren des Glaskörpers eine Zugvorspannung. Dabei ist die Höhe der Druckvorspannung von der Wärmeausdehnung, dem Elastizitätsmodul und der Transformationstemperatur des Glases sowie der Höhe des Wärmeübergangs zwischen Kühlmedium und Glasoberfläche und auch der Dicke des Glases abhängig. Üblicherweise wird eine Druckvorspannung von 80 - 120 MPa angestrebt. Auf diese Weise läßt sich die Biegefestigkeit des Glases gegenüber nicht-vorgespanntem Glas verdoppeln bis verdreifachen.

Erfindungsgemäß wird das Glas üblicherweise auf eine Temperatur von 650°C - 700°C erwärmt und mit Luft bei einem Wärmeübergangskoeffizienten von 200 - 550 W/(m² x K), vorzugsweise bis 500 W/(m² x K) bei 1 - 19 kPa, vorzugsweise 1 - 9 kPa Anblasdruck vorgespannt. Auf diese Weise wird ein Produkt aus spezifischer Wärmespannung Φ· (T_{g} - 20°C) erreicht, das 180 - 360 N/mm² beträgt.

Dabei wird die Wärmespannung Φ nach der Formel Φ = (σ_{V} + σ_{G}) / TUF bestimmt, wobei σ_{V} die Vorspannung des Glases in N/mm² und σ_{G} die Grundfestigkeit des nicht-vorgespannten Glases in N/mm² bedeutet und TUF die Temperaturunterschiedsfestigkeit in °K bedeutet. Prinzipiell kann für alle Gläser einheitlich von einem konstanten von der Glaszusammensetzung unabhängigen Grundwert für σ_{G} von etwa 50 N/mm² (MPa) ausgegangen werden. Die Temperaturunterschiedsfestigkeit TUF hängt von der Ausdehnung und der Wärmeleitfähigkeit des Glases ab. Die Wärmeleitfähigkeit kann, wie auch die Grundfestigkeit, für alle Gläser unabhängig von deren Zusammensetzung mit ca. 1,45 W/(m x K) angenommen werden. Damit liegt bei einer Glasdicke von 6 mm die TUF bei den erfindungsgemäß vorgespannten Alkaliborosilikatgläsern bei etwa 350°K, woraus sich für die erfindungsgemäßen Gläser ein Wert Φ von ungefähr 0,43 N/(mm² x K) ergibt. Mit den erfindungsgemäßen Gläsern werden mit einer Wärmeausdehnung α von 3,9 - 4,3 x 10⁻⁶/K und einer T_{g} von 545°C - 610°C, wie sie die erfindungsgemäßen Gläser aufweisen, auf einer normalen Luftvorspannanlage Vorspannwerte σ_{V} erhalten, die von 80 - 120 N/mm² reichen. Damit ergibt sich ein durchschnittlicher Mittelwert von etwa 100 N/mm² für σ_{V}.

Die Erfindung betrifft auch ein Verfahren zur Herstellung der erfindungsgemäßen Gläser. Dabei wird eine Rohschmelze mit der erfindungsgemäßen Zusammensetzung durch Zusammenmischen der entsprechenden Oxide und/oder Salze und Erwärmen erzeugt und nach dem Läutern ggf. nach vorheriger Formgebung unter Erstarren abgekühlt. Erfindungsgemäß sind sämtliche üblichen chemischen und physikalischen Läuterverfahren geeignet, wobei die Läuterung mit Alkalihalogeniden, insbesondere Alkalichloriden, vorzugsweise mit Natriumchlorid und Kaliumchlorid bevorzugt ist. Des weiteren haben sich für das erfindungsgemäße Herstellungsverfahren Sulfate als Läutermittel, wie beispielsweise Natriumsulfat, als geeignet erwiesen. Dabei werden die Halogenidsalze in einer Menge von 0,2 bis 2,0 Gew.-% und/oder die Sulfate in einer Menge von 0,01 bis 0,5 Gew.-% zugesetzt. Vorzugsweise werden die Läutermittel als Salz mit einem Kation eingesetzt, welches ohnehin in der Schmelzzusammensetzung vorliegt. Bevorzugte physikalische Läuterverfahren sind die Unterdruckläuterung und die Hochtemperaturläuterung.

Die Erfindung betrifft auch die Verwendung des erfindungsgemäßen Glases als Brandschutzglas, als Sicherheitsglas sowie als Gebrauchsglas für Industrieanlagenbau bzw. Bauteile und Komponenten davon sowie für Haushalts- und Laborgeräte.

Die Erfindung soll an den folgenden Beispielen näher erläutert werden. Es wurden im Labormaßstab verschiedene Glaszusammensetzungen erschmolzen und die jeweiligen Eigenschaften bestimmt. Die Ergebnisse sind für die Vergleichsbeispiele gemäß dem Stand der Technik in Tabelle 1 und die erfindungsgemäßen Beispiele in Tabelle 2 angegeben.

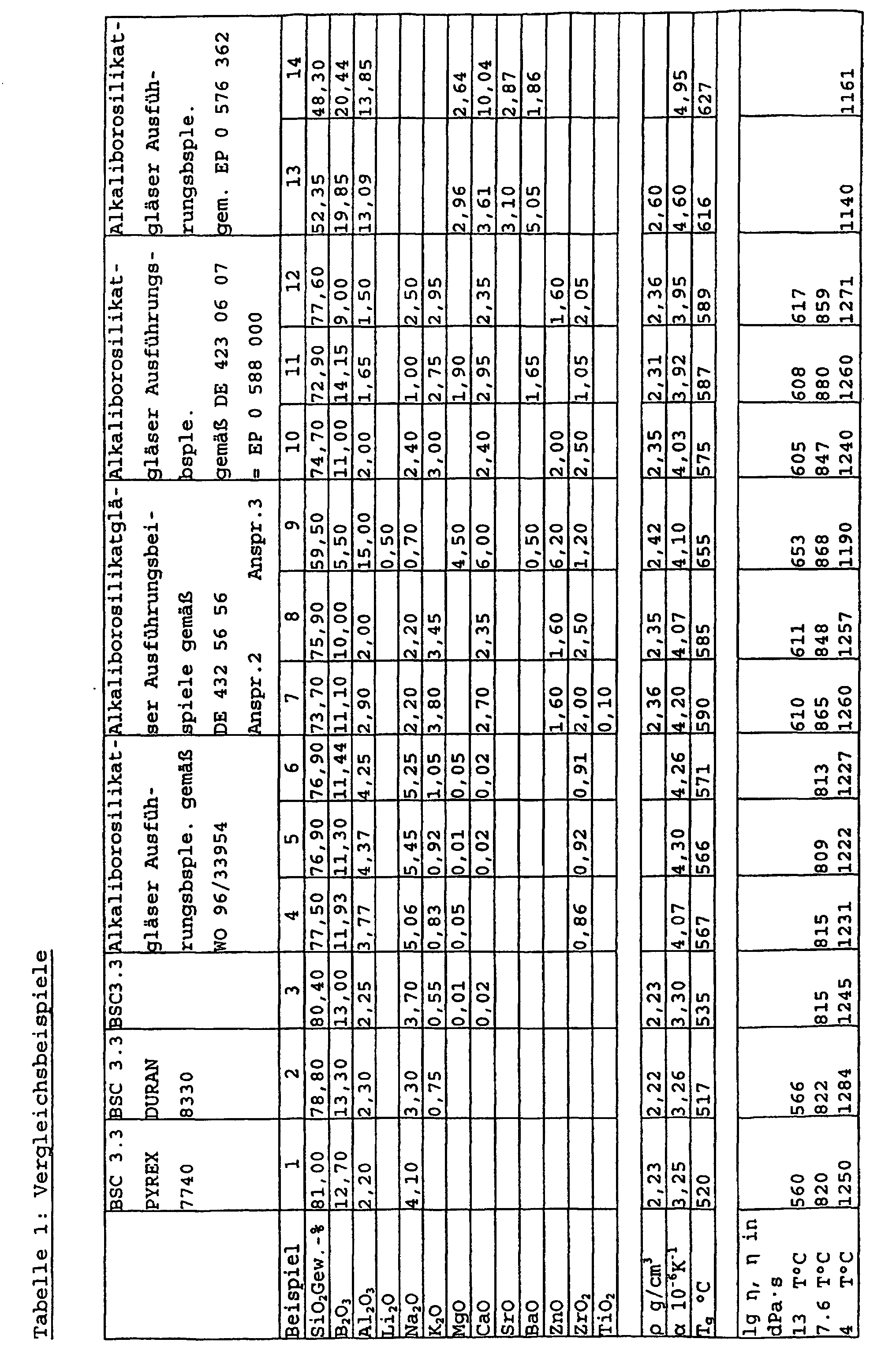

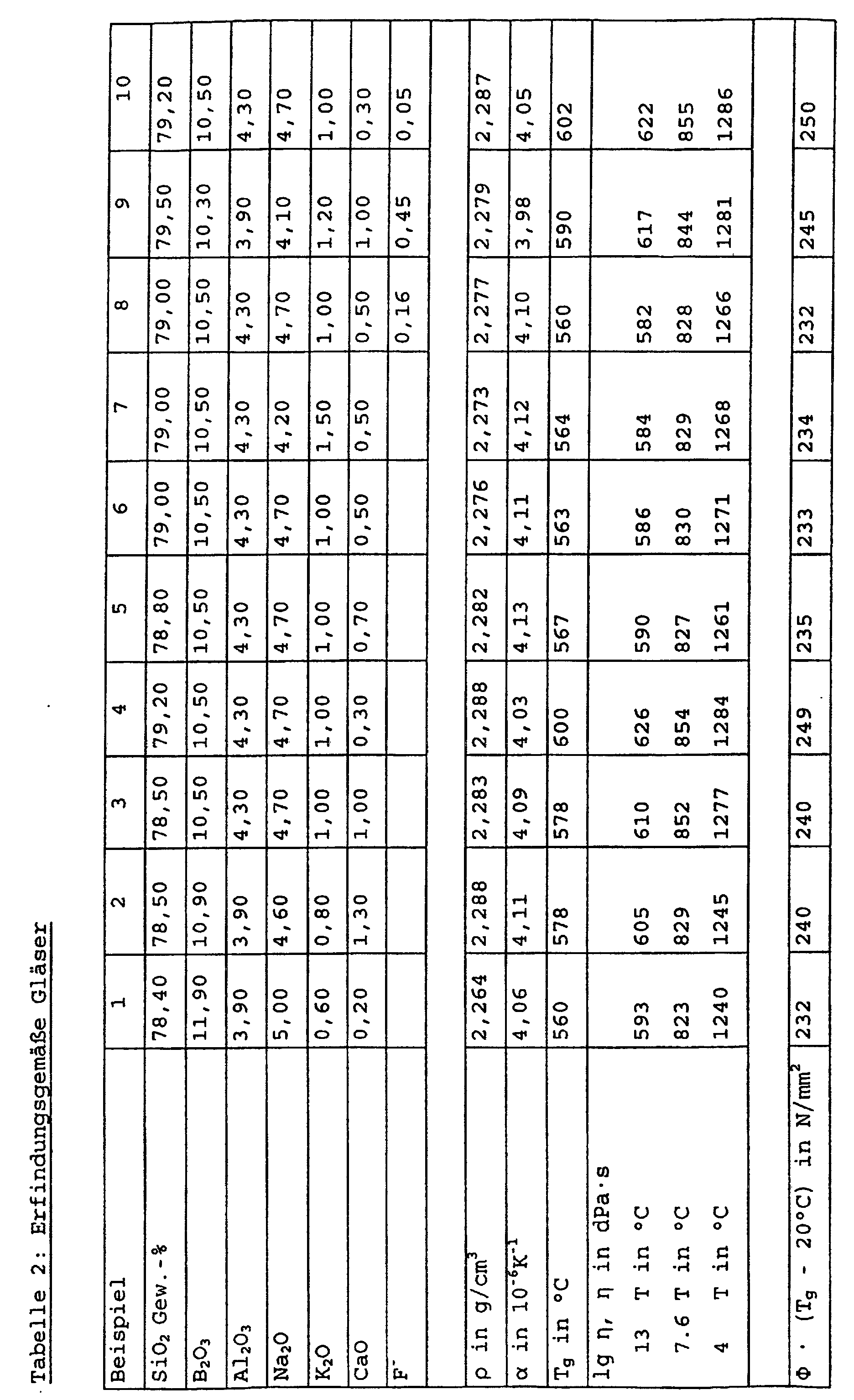

## Patentansprüche

1. Alkaliborosilikatglas mit guten thermischen Vorspanneigenschaften, **dadurch gekennzeichnet, dass** es:
| | |
|---|---|
| SiO₂ | 78,3 - 81,0 Gew.-% |
| B₂O₃ | 9,0 - 13,0 Gew.-% |
| Al₂O₃ | 3,5 - 5,3 Gew.-% |
| Na₂O | 3,5 - 6,5 Gew.-% |
| K₂O | 0,3 - 2,0 Gew.-% |
| CaO | 0,0 - 2,0 Gew.-% |
enthält.

2. Alkaliborosilikatglas nach Anspruch 1, **dadurch gekennzeichnet dass** es:
| | |
|---|---|
| SiO₂ | 78,3 - 80,5 Gew.-% |
| B₂O₃ | 9,0 - 12,5 Gew.-% |
| Al₂O₃ | 3,7 - 4,9 Gew.-% |
| Na₂O | 3,5 - 6,0 Gew.-% |
| K₂O | 0,5 - 1,8 Gew.-% |
| CaO | 0,4 - 1,8 Gew.-% |
enthält.

3. Alkaliborosilikatglas nach einem der vorhergehenden Ansprüche, **dadurch gekennzeichnet, dass** das Glas 0,05 - 0,5 Gew.-% Fluor enthält.

4. Alkaliborosilikatglas nach einem der vorhergehenden Ansprüche **dadurch gekennzeichnet, dass** es eine Dichte von < 2,3 g/cm³ aufweist.

5. Alkaliborosilikatglas nach einem der vorhergehenden Ansprüche, **dadurch gekennzeichnet, dass** es maximal 150 ppm Eisenoxid enthält.

6. Alkaliborosilikatglas nach einem der vorhergehenden Ansprüche, **dadurch gekennzeichnet, dass** es ein Flachglas ist.

7. Alkaliborosilikatglas nach einem der vorhergehenden Ansprüche, **dadurch gekennzeichnet, dass** es einen Längenausdehnungskoeffizienten α_{20/300} von 3,9 - 4,3 x 10⁻⁶/K aufweist.

8. Alkaliborosilikatglas nach einem der vorhergehenden Ansprüche, **dadurch gekennzeichnet, dass** es eine Viskosität von 10¹³ dPa·s zwischen 545°C - 630°C erreicht.

9. Alkaliborosilikatglas nach einem der vorhergehenden Ansprüche, **dadurch gekennzeichnet, dass** es eine Viskosität von 10^{7,6} dPa·s zwischen 810°C - 860°C erreicht.

10. Alkaliborosilikatglas nach einem der vorhergehenden Ansprüche, **dadurch gekennzeichnet, dass** es eine Viskosität von 10⁴ dPa·s zwischen 1240°C - 1290°C erreicht.

11. Verfahren zur Herstellung eines Alkaliborosilikatglases nach einem der Ansprüche 1-10 **dadurch gekennzeichnet, dass** man aus Oxiden und/oder Salzen von Si, B, Al, Na, K und Ca eine Schmelze herstellt, ggf. läutert, die Schmelze in eine gewünschte Glasform überführt und erstarren läßt, **dadurch gekennzeichnet, dass** die Schmelze die folgende Zusammensetzung aufweist:
| | |
|---|---|
| SiO₂ | 78,3 - 81,0 Gew.-% |
| B₂O₃ | 9,0 - 13,0 Gew.-% |
| Al₂O₃ | 3,5 - 5,3 Gew.-% |
| Na₂O | 3,5 - 6,5 Gew.-% |
| K₂O | 0,3 - 2,0 Gew.-% |
| CaO | 0,0 - 2,0 Gew.-% |

12. Verwendung eines Glases nach einem der Ansprüche 1-10 zur Herstellung von Flachglas, Brandschutzglas, Sicherheitsglas, Glasgeräten und/oder Industrieanlagen.

## Claims

1. Alkali borosilicate glass with good thermal tempering properties, **characterized in that** it contains:
| | |
|---|---|
| SiO₂ | 78.3 - 81.0% by weight |
| B₂O₃ | 9.0 - 13.0% by weight |
| Al₂O₃ | 3.5 - 5.3% by weight |
| Na₂O | 3.5 - 6.5% by weight |
| K₂O | 0.3 - 2.0% by weight |
| CaO | 0.0 - 2.0% by weight. |

2. Alkali borosilicate glass according to Claim 1, **characterized in that** it contains:
| | |
|---|---|
| SiO₂ | 78.3 - 80.5% by weight |
| B₂O₃ | 9.0 - 12.5% by weight |
| Al₂O₃ | 3.7 - 4.9% by weight |
| Na₂O | 3.5 - 6.0% by weight |
| K₂O | 0.5 - 1.8% by weight |
| CaO | 0.4 - 1.8% by weight. |

3. Alakali borosilicate glass according to one of the preceding claims, **characterized in that** the glass contains 0.05 - 0.5% by weight of fluorine.

4. Alkali borosilicate glass according to one of the preceding claims, **characterized in that** it has a density of < 2.3 g/cm³.

5. Alkali borosilicate glass according to one of the preceding claims, **characterized in that** it contains at most 150 ppm of iron oxide.

6. Alkali borosilicate glass according to one of the preceding claims, **characterized in that** it is a flat glass.

7. Alkali borosilicate glass according to one of the preceding claims, **characterized in that** it has a coefficient of longitudinal expansion α_{20/300} of 3.9 - 4.3 x 10⁻⁶/K.

8. Alkali borosilicate glass according to one of the preceding claims, **characterized in that** it reaches a viscosity of 10¹³ dPa·s at between 545°C - 630°C.

9. Alkali borosilicate glass according to one of the preceding claims, **characterized in that** it reaches a viscosity of 10^{7.6} dPa·s at between 810°C - 860°C.

10. Alkali borosilicate glass according to one of the preceding claims, **characterized in that** it reaches a viscosity of 10⁴ dPa·s at between 1240°C - 1290°C.

11. Process for producing an alkali borosilicate glass according to one of Claims 1 - 10, **characterized in that** a melt is produced from oxides and/or salts of Si, B, Al, Na, K and Ca, the melt is refined if appropriate, converted into a desired glass shape and allowed to solidify, **characterized in that** the melt has the following composition:
| | |
|---|---|
| SiO₂ | 78.3 - 81.0% by weight |
| B₂O₃ | 9.0 - 13.0% by weight |
| Al₂O₃ | 3.5 - 5.3% by weight |
| Na₂O | 3.5 - 6.5% by weight |
| K₂O | 0.3 - 2.0% by weight |
| CaO | 0.0 - 2.0% by weight. |

12. Use of a glass according to one of Claims 1 - 10 for producing flat glass, fireproof glass, safety glass, glass apparatus and/or industrial equipment.

## Revendications

1. Verre en borosilicate alcalin ayant de bonnes propriétés de précontrainte thermique, **caractérisé en ce qu'**il contient
| | |
|---|---|
| SiO₂ | 78, 3 - 81,0 % en poids |
| B₂O₃ | 9, 0 - 13,0 % en poids |
| Al₂O₃ | 3,5 - 5,3 % en poids |
| Na₂O | 3, 5 - 6,5 % en poids |
| K₂O | 0,3 - 2,0 % en poids |
| CaO | 0, 0 - 2,0 % en poids. |

2. Verre en borosilicate alcalin, selon la revendication 1, **caractérisé en ce qu'**il contient
| | |
|---|---|
| SiO₂ | 78,3 - 80,5 % en poids |
| B₂O₃ | 9, 0 - 12,5 % en poids |
| Al₂O₃ | 3,7 - 4,9 % en poids |
| Na₂O | 3, 5 - 6,0 % en poids |
| K₂O | 0,5 - 1,8 % en poids |
| CaO | 0,4 - 1,8 % en poids. |

3. Verre en borosilicate alcalin selon l'une quelconque des revendications précédentes, **caractérisé en ce que** le verre contient 0,05 - 0,5 % en poids de fluor.

4. Verre en borosilicate alcalin selon l'une quelconque des revendications précédentes,
**caractérisé en ce qu'**il présente une densité < 2,3 g/cm³.

5. Verre en borosilicate alcalin selon l'une quelconque des revendications précédentes, **caractérisé en ce qu'**il contient au maximum 150 ppm d'oxyde de fer.

6. Verre en borosilicate alcalin selon l'une quelconque des revendications précédentes, **caractérisé en ce qu'**il s'agit d'un verre plat.

7. Verre en borosilicate alcalin selon l'une quelconque des revendications précédentes, **caractérisé en ce qu'**il présente un coefficient de dilatation longitudinale α_{20/300} de 3,9 - 4,3 x 10⁻⁶ /K.

8. Verre en borosilicate alcalin selon l'une quelconque des revendications précédentes, **caractérisé en ce qu'**il atteint une viscosité de 10¹³ dPa•s entre 545°C - 630°C.

9. Verre en borosilicate alcalin selon l'une quelconque des revendications précédentes, **caractérisé en ce qu'**il atteint une viscosité de 10^{7,6} dPa•s entre 810°C - 860°C.

10. Verre en borosilicate alcalin selon l'une quelconque des revendications précédentes, **caractérisé en ce qu'**il atteint une viscosité de 10⁴ dPa•s entre 1240°C - 1290°C.

11. Procédé en vue de la fabrication d'un verre en borosilicate alcalin selon l'une quelconque des revendications 1-10, **caractérisé en ce qu'**une masse en fusion est préparée, le cas échéant, est affinée à partir des oxydes et/ou des sels de Si, B, Al, Na, K et Ca, **en ce que** la masse en fusion est convertie en une forme de verre désirée et est laissée au repos pour lui permettre de se solidifier, **caractérisé en ce que** la masse en fusion présente la composition suivante :
| | |
|---|---|
| SiO₂ | 78,3 - 81,0 % en poids |
| B₂O₃ | 9,0 - 13,0 % en poids |
| Al₂O₃ | 3,5 - 5,3 % en poids |
| Na₂O | 3,5 - 6,5 % en poids |
| K₂O | 0,3 - 2,0 % en poids |
| CaO | 0,0 - 2,0 % en poids. |

12. Utilisation d'un verre selon l'une quelconque des revendications 1-10, en vue de la fabrication de verre plat, de verre de protection contre les incendies, de verre de sécurité, d'appareils en verre et/ou d'installations industrielles.
